# EUROPEAN PATENT APPLICATION

(11) **EP 1 037 482 A2**
(43) Date of publication of application: **20.09.2000**
(21) Application number: 99116856.8
(22) Date of filing: 03.09.1999
(51) Int. Cl.: H04Q 7/32

(54) **Apparatus and method for location-dependent setting of air interface parameters of a mobile radio device**

(30) Priority: 24.12.1998 JP 36720598
(71) Applicant: KABUSHIKI KAISHA TOSHIBA, Kawasaki-shi, Kanagawa 210-8520 (JP)
(72) Inventor: Aoyagi, Kazunori, Toshiba Kabushiki Kaisha, Minato-ku Tokyo 105-8001 (JP); Kinoshita, Katsuhiro, Toshiba Kabushiki Kaisha, Minato-ku Tokyo 105-8001 (JP)
(74) Representative: HOFFMANN - EITLE

(57) **Abstract**

The present invention provides a radio communication apparatus capable of automatically setting a frequency band, a transmission power and the like in accordance with radio wave specifications of an area where it is used. A positional information detecting section (31) receives a radio wave from a GPS satellite through an antenna (33) and inputs the radio wave to a GPS receiving section (34). The GPS receiving section (34) despreads and demodulates the spectrum-spread signal transmitted from the GPS satellite, and transmits the demodulated signal to a positioning section (35). The positioning section (35) extracts the information about a current position where the radio communication apparatus from the demodulated signal, and outputs the information to a CPU (37) of a specification controlling section (32) as information about a position where the radio communication apparatus is to be used. In accordance with the positional information transmitted from the positioning section (35), the CPU (37) makes access to a memory (36), reads radio wave specifications corresponding to the area from the memory (36), controls oscillation frequencies of oscillator (23, 29) and controls gains of amplifiers (24, 27) to control the power.

## Description

The present invention relates to a radio communication apparatus for setting a frequency band and a transmission power in accordance with a radio specification of an area where it is used, and to a method of setting the specification of the radio communication apparatus.

A conventional mobile terminal apparatus comprises a transmitting section and a receiving section in a plurality of channels, and can use an optimum frequency band, of a plurality of frequency bands, to make communications by changing the channels. As for this type of the mobile terminal apparatus, an apparatus described in, for example, Jpn. Pat. Appln. KOKAI Publication No. 6-90204 is well known.

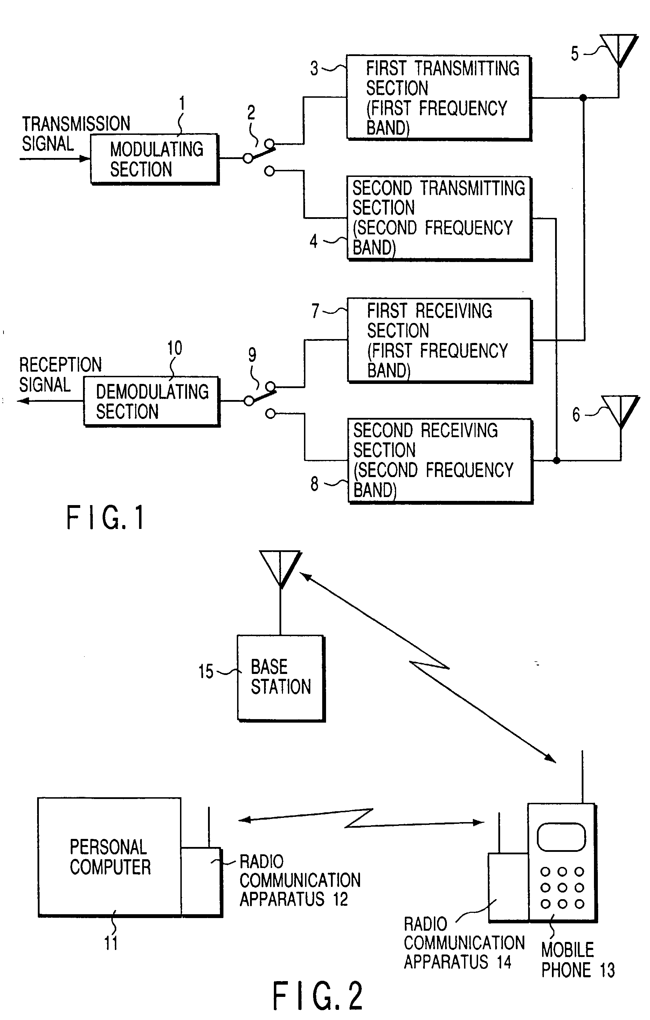

FIG. 1 is a block diagram showing a constitution of the mobile terminal apparatus described in Jpn. Pat. Appln. KOKAI Publication No. 6-90204. As shown in the figure, a transmission signal is modulated by a modulating section 1, and is output to a first transmitting section 3 or a second transmitting section 4 via a changeover switch 2. The first transmitting section 3 radiates the transmission signal from a first antenna 5 by using a first frequency band, and the second transmitting section 4 radiates the transmission signal from a second antenna 6 by using a second frequency band. On the other hand, the reception signal of the first antenna 5 is input to a first receiving section 7, and the reception signal of the second antenna 6 is input to a second receiving section 8. The first receiving section 7 receives the signal in the first frequency band, and frequency-converts and power-amplifies the signal. The second receiving section 8 receives the signal in the second frequency band, and frequency-converts and power-amplifies the signal. The signals received by the first receiving section 7 and the second receiving section 8 are selected by a changeover switch 9, transmitted to a demodulating section 10 and demodulated therein.

By manually changing the changeover switches 2 and 9 in response to the reception field intensity and the vacant conditions of the lines, an optimum frequency band can be selected from a plurality of frequency bands to make communications.

In the radio communications, the communications have to be made by using the frequency band and the transmission power based on the specifications of each country. Even in the communications using a frequency band called an Industrial Scientific Medical (ISM) band, the employable frequency bands are different in radio wave management organizations; for example, the frequency is 2471 - 2497 MHz in Japan, and 2400 - 2483.5 MHz in the U.S.A. In this case, the frequency band of the transmitting section and the receiving section of the radio communication apparatus have to be preset to fit with the radio specifications in accordance with those of the area where it is used. The frequency band is fixed in the radio communication apparatus in accordance with area where the radio communication apparatus is to be used, as mentioned here. Therefore, when the radio communication apparatus moves to an area where other specifications are employed, communications cannot be made with the radio communication apparatus and, at the same time, the communications may be considered illegal.

Further, the above-described conventional radio communication apparatus can respond to the frequency bands different in areas such as Japan and the U.S.A. by changing the changeover switches 2 and 9. However, since the communication apparatus cannot automatically discriminate the area where it is located, the switches must be manually changed and its operation is very cumbersome.

The present invention is accomplished to solve the above-described problems, and its object is to provide a radio communication apparatus capable of automatically setting the frequency band, the transmission power and the like corresponding to the radio specifications in the areas where it is used, and also provide a method of setting specification of the radio communication apparatus.

According to the present invention, a radio communication apparatus specification setting method for setting inner specifications for transmission and reception signals is provided. This method includes a step of detecting information about a position where the radio communication apparatus is to be used and setting inner specifications for the transmission and reception signals on the basis of the detected positional information.

According to the present invention, a radio communication apparatus specification setting method for setting the inner specifications for transmission and reception signals in accordance with radio specifications different in areas is provided. This method includes a step of detecting the information about the position where the radio communication apparatus is to be used and setting the inner specifications for transmission and reception signal on the basis of the detected positional information.

According to the present invention, a radio communication apparatus for setting inner specifications for transmission and reception signals is provided. The radio communication apparatus comprises positional information detecting means for detecting the information about the position where the radio communication apparatus is to be used and specification setting means for automatically setting the inner specifications for transmission and reception signals on the basis of the positional information detected by the positional information detecting means.

The specification setting means is preferably constituted to read the specification information of each area which is preliminarily stored in a memory and to set the inner specifications for the transmission and reception signals, on the basis of the positional information detected by the positional information detecting means.

The positional information detecting means may be constituted to be operated by an operational command supplied when the power supply is turned on and to detect the positional information.

The positional information detecting means may be constituted to be operated by an operational command supplied by switch operations and to detect the positional information.

As for the inner specifications, for example, the frequencies of the transmission and reception signals, an output level of a transmission signal can be set.

According to the present invention, a radio communication apparatus for setting inner specifications for transmission and reception signals in accordance with the radio specifications different in areas is provided. The radio communication apparatus comprises positional information detecting means for detecting the information about a position where the radio communication apparatus is to be used, and specification setting means for automatically setting the inner specifications for transmission and reception signals on the basis of the positional information detected by the positional information detecting means.

According to the present invention, a radio communication apparatus for setting inner specifications for transmission and reception signals in accordance with the radio specifications different in areas is provided. The radio communication apparatus comprises positional information detecting means for detecting the information about a position where the radio communication apparatus is to be used, in accordance with positioning information from a GPS, and specification setting means for automatically setting the inner specifications for transmission and reception signals on the basis of the positional information detected by the positional information detecting means.

According to the present invention, a radio communication apparatus for setting inner specifications for transmission and reception signals in accordance with the radio specifications different in areas is provided. The radio communication apparatus comprises positional information detecting means for receiving a signal from a base station of a cellular phone and detecting the information about a position where the radio communication apparatus is to be used, and specification setting means for automatically setting the inner specifications for transmission and reception signals on the basis of the positional information detected by the positional information detecting means.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a configuration of a conventional radio communication apparatus;
FIG. 2 is a diagram schematically showing an overall constitution of a communication system according to the present invention;
FIG. 3 is a block diagram showing a configuration of radio communication apparatus according to a first embodiment of the present invention;
FIG. 4 is a diagram showing an example of contents of a radio specification memory according to the first embodiment of the present invention; and
FIG. 5 is a block diagram showing a configuration of radio communication apparatus according to a second embodiment of the present invention.

Embodiments of the present invention will be explained below with reference to the drawings.

### (First Embodiment)

FIG. 2 schematically shows an overall constitution of a communication system according to the present invention. As shown in the figure, for example, a radio communication apparatus 12 is provided at a personal computer 11, and a radio communication apparatus 14 is provided at a mobile phone 13. Radio communications are made between the personal computer 11 and the mobile phone 13 through the radio communication apparatuses 12 and 14. The mobile phone 13 has a function of making radio communications directly with a base station 15.

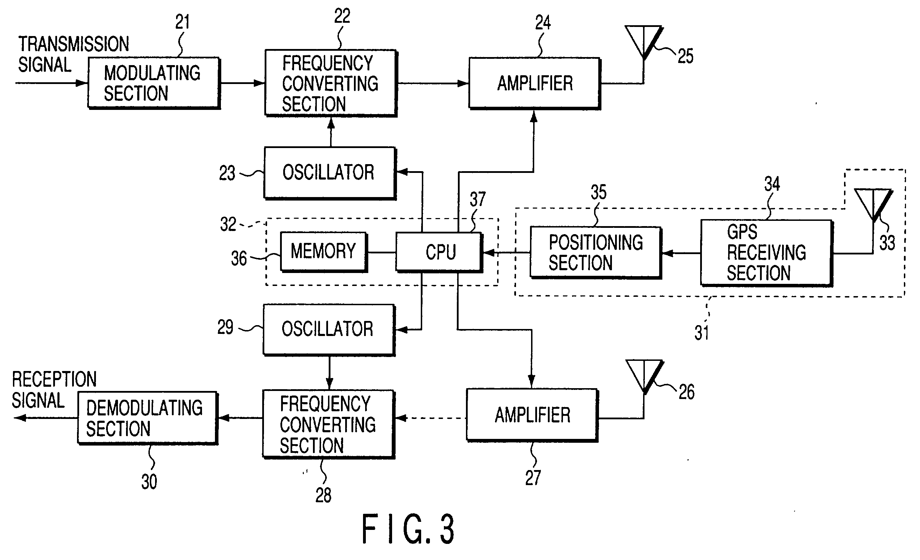

The radio communication apparatuses 12 and 14 are constituted as shown in FIG. 3.

In FIG. 3, reference numeral 21 denotes a modulating section, which modulates a transmission signal sent from, for example, the personal computer 11 or the mobile phone 13 and outputs it to a transmission frequency converting section 22. The frequency converting section 22 frequency-converts the modulated signal with a carrier frequency responding to an oscillation frequency of a transmission oscillator 23. The oscillator 23 is constituted by, for example, a frequency synthesizer. The signal frequency-converted by the frequency converting section 22 is amplified by a power amplifier 24 and transmitted to other radio communication apparatuses from an antenna 25.

A radio wave transmitted from the other radio communication apparatus is received by an antenna 26, amplified by a power amplifier 27 and transmitted to a reception frequency converting section 28. The frequency converting section 28 frequency-converts the received signal with a carrier frequency responding to an oscillation frequency of a reception oscillator 29 and outputs it to a demodulating section 30. The oscillator 29 is constituted by, for example, a frequency synthesizer. The demodulating section 30 demodulates the signal frequency-converted by the frequency converting section 28, and outputs it to the personal computer 11 or the mobile phone 13 as the received signal.

The oscillation frequencies of the frequency converting sections 22 and 28, and the gains of the amplifiers 24 and 27 are controlled by a positional information detecting section 31 and a specification controlling section 32. The positional information detecting section 31, constituted by an antenna 33 for receiving the radio wave from a Global Positioning System (GPS), a GPS receiving section 34 and a positioning section 35, receives a startup command from a control CPU 37 of the specification controlling section 32 to be operated every time the power supply of the radio communication apparatus is turned on. The positional information detecting section 31 receives the radio wave from the GPS satellite via the antenna 33 and inputs it to the GPS receiving section 34. The signal from the GPS satellite is spectrum-spread. Therefore, the signal is despread at the GPS receiving section 34 and the demodulated signal is sent to the positioning section 35. The positioning section 35 extracts the information about a current position where the radio communication apparatus from the demodulated signal and outputs it to the specification controlling section 32 as the information about the position where the radio communication apparatus when used. The GPS can obtain the three-dimensional information (latitude, longitude and altitude) about the receiver's position by receiving the radio wave emitted from a plurality of GPS satellites.

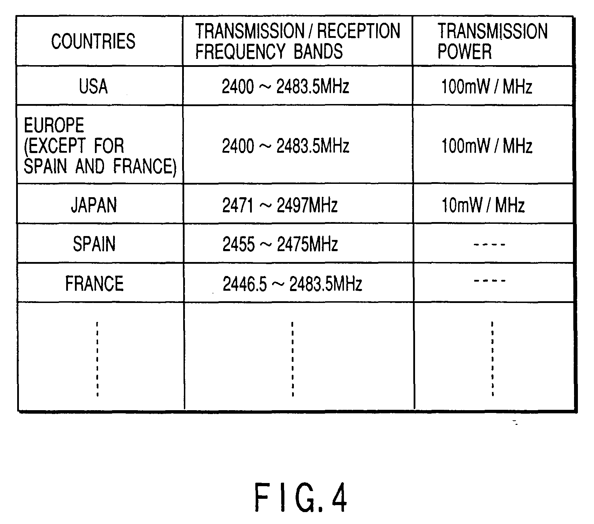

The specification controlling section 32 is constituted by a memory 36 for storing the radio specification of each area, and a control CPU 37. The positional information which is output from the positional information detecting section 31 is input to the CPU 37. The memory 36 stores the transmission/reception frequency band and the transmission output level of each country. FIG. 4 shows an example of the information (radio specification) stored in the memory 36. For example, the frequency band (ISM band) is "2400-2483.5 MHz" and the transmission power is "100 mW/MHz" in the U.S.A. and the Europe (except for Spain and France). In Japan, the frequency band (ISM band) is "2471-2497 MHz" and the transmission power is "10 mW/MHz". The name of each country is mentioned in FIG. 4, but the memory 36 stores the data representing the area of each country with the range of the latitude and the longitude. As for the unit of the transmission power, not "mW", but "mW/MHz" is used here, because making the spread spectrum communications in the ISM band is determined and, therefore, the transmission power per MHz is determined here.

The CPU 37 reads the specification corresponding to the used position where the radio communication apparatus from the memory 36 in accordance with the positional information of the radio communication apparatus when used, which is transmitted from the positional information detecting section 31, provides the frequency control information to the oscillators 23 and 29 constituted by frequency synthesizers to control the carrier frequency, provides the gain control information to the amplifiers 24 and 27 to control the gain, and controls the power.

In the above constitution, the positional information detecting section 31 is operated every time the power supply of the radio communication apparatus is turned on, receives the radio wave from the GPS satellite via the antenna 33 and inputs it to the GPS receiving section 34. The GPS receiving section 34 despreads and demodulates the spread spectrum signal transmitted from the GPS satellite, and sends the demodulated signal to the positioning section 35. The positioning section 35 extracts from the demodulated signal the information about the position where the radio communication apparatus is to be used, and outputs the information to the CPU 37 of the specification controlling section 32. The CPU 37 makes access to the memory 36 in accordance with the positional information sent from the positioning section 35, reads from the memory 36 the specification corresponding to the position where the radio communication apparatus is to be used, controls the oscillation frequencies of the oscillators 23 and 29, controls the gains of the amplifiers 24 and 27 to control the power.

The oscillation frequencies of the transmission oscillator 23 and the reception oscillator 29 are adjusted to be the specification corresponding to the position where the radio communication apparatus when used, in the above-described manner. At the same time, the gains of the transmission amplifier 24 and the reception amplifier 27 are also adjusted to be the specification corresponding to the position where the radio communication apparatus is to be used.

At the transmission, first, the transmission signal is modulated by the modulating section 21, and frequency-converted with the carrier frequency corresponding to the oscillation frequency of the oscillator 23 at the frequency converting section 22. The frequency-converted signal is power-amplified by the amplifier 24 and transmitted from the antenna 25 to a partner's radio communication apparatus.

On the other hand, at the reception, the radio wave transmitted from the partner's radio communication apparatus is received by the antenna 26, and power-amplified by the amplifier 27. Next, the wave is frequency-converted with the carrier frequency corresponding to the oscillation frequency of the oscillator 29 at the frequency converting section 28 and then input to the demodulating section 30. The demodulating section 30 demodulates the frequency-converted signal to obtain the received signal.

As described above, the oscillation frequencies of the oscillators 23 and 29, and the gains of the amplifiers 24 and 27 are automatically controlled to be the specification about the position where the radio communication apparatus is to be used, by the positional information detecting section 31 and the specification controlling section 32. Therefore, even when the radio communication apparatus moves to areas with different communication frequency bands, the used frequency bands do not need to be manually changed by switches and the radio communications corresponding to local specifications can be thereby made.

### (Second Embodiment)

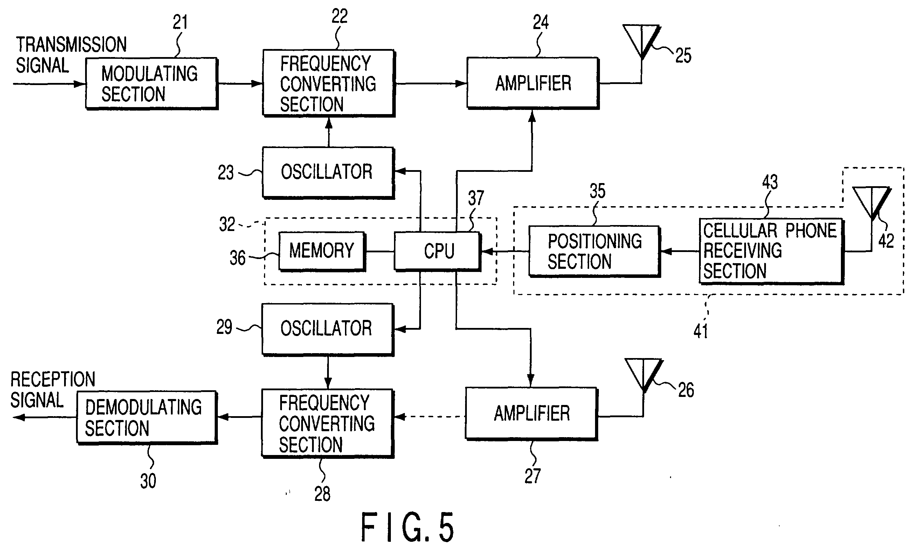

Next, a radio communication apparatus according to the second embodiment of the present invention will be described with reference to FIG. 5. The second embodiment is described as a case of using the information from a base station of a cellular phone, as the positional information detecting means. That is, in the second embodiment, a positional information detecting section 41 employing the information from a base station of a cellular phone is provided as shown in FIG. 5, instead of the positional information detecting section 31 employing the GPS satellite in the first embodiment. The positional information detecting section 41 is constituted by an antenna 42 for receiving the radio wave from the base station of the cellular phone, a cellular phone receiving section 43 for demodulating the received signal, and a positioning section 44 for extracting the information about the latitude and the longitude of the base station from the signal demodulated by the cellular phone receiving section 43. For example, the positional information detecting section 41 receives a startup command from the CPU 37 to be operated every time the power supply of the radio communication apparatus is turned on. The information about the latitude and the longitude which are output from the positioning section 44 is transmitted to the specification controlling section 32. The other constituent elements are the same as those of the first embodiment and, therefore, the same portions are denoted by the same reference numerals and their detailed explanations are omitted.

In the CDMA cellular system based on ARIB STD T53 which is one of cellular phone systems, a paging channel is used to transmit the control information from a base station to a mobile station. A system parameter message, as one of messages on the paging channel, includes the information about the latitude BASE LAT and the longitude BASE LONG of the base station. The latitude and the longitude of the base station are different from the position where the communication apparatus which receives the radio wave from the base station in the strict sense of the word. However, if the size of the cell of the base station is small enough as compared to the range where a certain specification is employed, both can be considered at almost the same position. Therefore, the information about the latitude and the longitude of the base station can be detected by the positional information detecting section 41, and the specification for the frequency band and the power of the radio communication apparatus can be controlled in accordance with the information.

That is, the positional information detecting section 41 receives the radio wave from the cellular base station through the antenna 42 and outputs the received signal to the cellular phone receiving section 43 every time the power supply of the radio communication apparatus is turned on. The cellular phone receiving section 43 demodulates the signal from the base station and sends it to the positioning section 44. The positioning section 44 extracts the information about the latitude and the longitude of the base station from the demodulated signal, and sends the information to the CPU 37 in the specification controlling section 32. The CPU 37 reads from the memory 36 the specification corresponding to the position where the radio communication apparatus is to be used on the basis of the information from the positioning section 44, controls the carrier frequency by providing the frequency control signal to the oscillators 23 and 29 which are the frequency synthesizers, and controls the gain by providing the gain control information to the amplifiers 24 and 27.

As described above, the oscillation frequencies of the oscillators 23 and 29, and the gains of the amplifiers 24 and 27 are automatically controlled to be the specification about the position where the radio communication apparatus is to be used, by the positional information detecting section 41 and the specification controlling section 32. Therefore, even if the apparatus moves to areas where the communication frequency bands are different, the used frequency bands do not need to be manually changed by switches and the radio communications corresponding to the local specifications can be thereby made.

In each of the above-described embodiments, the frequencies of the oscillators 23 and 29, and the gains of the amplifiers 24 and 27 are both controlled in accordance with the detected information of the position. However, either the frequencies of the oscillators or the gains of the amplifiers may be controlled.

In each embodiment, the positional information detecting sections 31 and 41 are operated every time the power supply of the radio communication apparatus is turned on. However, the positional information detecting sections 31 and 41 may also be arbitrarily operated by manual control such as button switches or the like. In this case, the positional information detecting sections 31 and 41 may be operated by the manual control only or by combination of the startup command of the CPU 37 made when the power supply is turned on and arbitrary startup commands made by the manual control. By providing the means for operating the positional information detecting sections 31 and 41 by manual control as described above, even when the radio communication apparatus moves to areas where the specifications are different while, for example, the power supply thereof is turned on, the frequency bands, the transmission powers and the like can immediately fit with the local specifications by arbitrarily starting up the positional information detecting sections 31 and 41.

As described above in detail, according to the present invention, the information about the position where the radio communication apparatus is to be used is detected by providing the positional information detecting section employing the radio wave emitted from the GPS satellite or the radio wave transmitted from the base station of the cellular phone, and the frequency band, transmission power and the like are set to fit with the local radio specifications on the basis of the positional information detected by the positional information detecting section, by providing the specification controlling section for setting the inner specifications. Therefore, even when the radio communication apparatus moves to areas where the specifications are different, the transmission/reception frequency bands, the transmission power and the like of the radio communication apparatus can be automatically changed to fit with the local radio specifications.

In addition, the specification controlling section preliminarily stores the radio specification information of each area in the memory, reads the specification information of the corresponding area from the memory on the basis of the positional information detected by the positional information detecting section, and sets the inner specifications for the transmission and reception signals. Therefore, the inner specifications of the radio communication apparatus can be set simply and exactly.

## Claims

1. A radio communication apparatus specification setting method for setting inner specifications for transmission and reception signals, said method characterized by comprising the steps of:
detecting (31, 41) information about a position where said radio communication apparatus is to be used; and
setting (32) the inner specifications for the transmission and reception signals on the basis of the detected positional information.

2. A radio communication apparatus specification setting method according to claim 1, characterized in that said setting step includes the step of setting the inner specifications by reading specification information for respective areas stored preliminarily in a memory (36), on the basis of the detected positional information.

3. A radio communication apparatus specification setting method according to claim 1, characterized in that the step of detecting is executed in accordance with an operational command supplied when a power supply is turned on.

4. A radio communication apparatus specification setting method according to claim 1, characterized in that the step of detecting is executed in accordance with an operational command supplied by switch operations.

5. A radio communication apparatus specification setting method according to claim 1, characterized in that said inner specification is a frequency band of transmission and reception signals.

6. A radio communication apparatus specification setting method according to claim 1, characterized in that said inner specification is an output level of a transmission signal.

7. A radio communication apparatus specification setting method for setting inner specifications for transmission and reception signals in accordance with radio specifications different in areas, said method characterized by comprising the steps of:
detecting (31, 41) information about a position where said radio communication apparatus is to be used; and
setting (32) the inner specifications for the transmission and reception signals on the basis of the detected positional information.

8. A radio communication apparatus specification setting method for setting inner specifications for transmission and reception signals in accordance with radio specifications different in areas, said method characterized by comprising the steps of:
receiving a radio wave from a GPS satellite and detecting (31) information about a position where said radio communication apparatus is to be used; and
setting (32) the inner specifications for the transmission and reception signals on the basis of the detected positional information.

9. A radio communication apparatus specification setting method for setting inner specifications for transmission and reception signals in accordance with radio specifications different in areas, said method characterized by comprising the steps of:
receiving a radio wave from a base station of a cellular phone and detecting (41) information about a position where said radio communication apparatus is to be used; and
setting (32) the inner specifications for the transmission and reception signals on the basis of the detected positional information.

10. A radio communication apparatus for setting inner specifications for transmission and reception signals, said apparatus characterized by comprising:
positional information detecting means (31, 41) for detecting information about a position where said radio communication apparatus is to be used; and
specification setting means (32) for automatically setting the inner specifications for the transmission and reception signals on the basis of the positional information detected by said positional information detecting means.

11. A radio communication apparatus according to claim 10, characterized in that said specification setting means sets the inner specifications for the transmission and reception signals by reading the specification information for respective areas preliminarily stored in a memory (36), on the basis of the positional information detected by said positional information detecting means.

12. A radio communication apparatus according to claim 10, characterized in that said positional information detecting means is operated to detect the positional information, in accordance with an operational command supplied when a power supply is turned on.

13. A radio communication apparatus according to claim 10, characterized in that said positional information detecting means is operated to detect the positional information, in accordance with an operational command supplied by switch operations.

14. A radio communication apparatus according to claim 10, characterized in that said inner specification is a frequency band of the transmission and reception signals.

15. A radio communication apparatus according to claim 10, characterized in that said inner specification is an output level of the transmission signal.

16. A radio communication apparatus for setting inner specifications for transmission and reception signals in accordance with radio specifications different in areas, said apparatus characterized by comprising:
positional information detecting means (31, 41) for detecting information about a position where said radio communication apparatus is to be used; and
specification setting means (32) for automatically setting the inner specifications for the transmission and reception signals on the basis of the positional information detected by said positional information detecting means.

17. A radio communication apparatus for setting inner specifications for transmission and reception signals in accordance with radio specifications different in areas, said apparatus characterized by comprising:
positional information detecting means (31) for detecting information about a position where said radio communication apparatus is to be used, in accordance with positioning information from a GPS; and
specification setting means (32) for automatically setting the inner specifications for the transmission and reception signals on the basis of the positional information detected by said positional information detecting means.

18. A radio communication apparatus for setting inner specifications for transmission and reception signals in accordance with radio specifications different in areas, said apparatus characterized by comprising:
positional information detecting means (41) for receiving a signal from a base station of a cellular phone and detecting information about a position where said radio communication apparatus is to be used; and
specification setting means (32) for automatically setting the inner specifications for the transmission and reception signals on the basis of the positional information detected by said positional information detecting means.

19. A radio communication apparatus characterized by comprising:
a modulating section (21) for modulating a transmission signal;
a transmission frequency converting section (22) for frequency-converting the signal modulated by said modulating section, in accordance with a frequency of a transmission oscillator;
a transmission amplifier (24) for amplifying the signal converted by said transmission frequency converting section;
a reception amplifier (27) for amplifying a reception signal;
a reception frequency converting section (28) for frequency-converting the signal amplified by said reception amplifier, in accordance with a frequency of a reception oscillator;
a demodulating section (30) for demodulating the signal frequency-converted by said reception frequency converting section;
a specification controlling means (32) for controlling frequencies of said transmission oscillator and said reception oscillator; and
a positional information detecting section (31) for detecting information about a position where said radio communication apparatus is to be used, in accordance with positioning information from a GPS,
wherein said specification controlling means automatically controls the frequencies of said transmission oscillator and said reception oscillator, in accordance with the positional information detected by said positional information detecting means.

20. A radio communication apparatus characterized by comprising:
a modulating section (21) for modulating a transmission signal;
a transmission frequency converting section (22) for frequency-converting the signal modulated by said modulating section, in accordance with a frequency of a transmission oscillator;
a transmission amplifier (24) for amplifying the signal converted by said transmission frequency converting section;
a reception amplifier (27) for amplifying a reception signal;
a reception frequency converting section (28) for frequency-converting the signal amplified by said reception amplifier, in accordance with a frequency of a reception oscillator;
a demodulating section (30) for demodulating the signal frequency-converted by said reception frequency converting section;
a specification controlling means (32) for controlling gains of said transmission amplifier and said reception amplifier; and
a positional information detecting section (31) for detecting information about a position where said radio communication apparatus is to be used, in accordance with positioning information from a GPS,
wherein said specification controlling means automatically controls the gains of said transmission amplifier and said reception amplifier, in accordance with the positional information detected by said positional information detecting means.

21. A radio communication apparatus characterized by comprising:
a modulating section (21) for modulating a transmission signal;
a transmission frequency converting section (22) for frequency-converting the signal modulated by said modulating section, in accordance with a frequency of a transmission oscillator;
a transmission amplifier (24) for amplifying the signal converted by said transmission frequency converting section;
a reception amplifier (27) for amplifying a reception signal;
a reception frequency converting section (28) for frequency-converting the signal amplified by said reception amplifier, in accordance with a frequency of a reception oscillator;
a demodulating section (30) for demodulating the signal frequency-converted by said reception frequency converting section;
a specification controlling means (32) for controlling frequencies of said transmission oscillator and said reception oscillator and controlling gains of said transmission amplifier and said reception amplifier; and
a positional information detecting section (31) for detecting information about a position where said radio communication apparatus is to be used, in accordance with positioning information from a GPS,
wherein said specification controlling means automatically controls the frequencies of said transmission oscillator and said reception oscillator and automatically controls the gains of said transmission amplifier and said reception amplifier, in accordance with the positional information detected by said positional information detecting means.

22. A radio communication apparatus characterized by comprising:
a modulating section (21) for modulating a transmission signal;
a transmission frequency converting section (22) for frequency-converting the signal modulated by said modulating section, in accordance with a frequency of a transmission oscillator;
a transmission amplifier (24) for amplifying the signal converted by said transmission frequency converting section;
a reception amplifier (27) for amplifying a reception signal;
a reception frequency converting section (28) for frequency-converting the signal amplified by said reception amplifier, in accordance with a frequency of a reception oscillator;
a demodulating section (30) for demodulating the signal frequency-converted by said reception frequency converting section;
a specification controlling means (32) for controlling frequencies of said transmission oscillator and said reception oscillator; and
a positional information detecting section (41) for receiving a signal from a base station of a cellular phone and detecting information about a position where said radio communication apparatus is to be used,
wherein said specification controlling means automatically controls the frequencies of said transmission oscillator and said reception oscillator, in accordance with the positional information detected by said positional information detecting means.

23. A radio communication apparatus characterized by comprising:
a modulating section (21) for modulating a transmission signal;
a transmission frequency converting section (22) for frequency-converting the signal modulated by said modulating section, in accordance with a frequency of a transmission oscillator;
a transmission amplifier (24) for amplifying the signal converted by said transmission frequency converting section;
a reception amplifier (27) for amplifying a reception signal;
a reception frequency converting section (28) for frequency-converting the signal amplified by said reception amplifier, in accordance with a frequency of a reception oscillator;
a demodulating section (30) for demodulating the signal frequency-converted by said reception frequency converting section;
a specification controlling means (32) for controlling gains of said transmission amplifier and said reception amplifier; and
a positional information detecting section (41) for receiving a signal from a base station of a cellular phone and detecting information about a position where said radio communication apparatus is to be used,
wherein said specification controlling means automatically controls the gains of said transmission amplifier and said reception amplifier, in accordance with the positional information detected by said positional information detecting means.

24. A radio communication apparatus characterized by comprising:
a modulating section (21) for modulating a transmission signal;
a transmission frequency converting section (22) for frequency-converting the signal modulated by said modulating section, in accordance with a frequency of a transmission oscillator;
a transmission amplifier (24) for amplifying the signal converted by said transmission frequency converting section;
a reception amplifier (27) for amplifying a reception signal;
a reception frequency converting section (28) for frequency-converting the signal amplified by said reception amplifier, in accordance with a frequency of a reception oscillator;
a demodulating section (30) for demodulating the signal frequency-converted by said reception frequency converting section;
a specification controlling means (32) for controlling the frequencies of said transmission oscillator and said reception oscillator, and controlling gains of said transmission amplifier and said reception amplifier; and
a positional information detecting section (41) for receiving a signal from a base station of a cellular phone and detecting information about a position where said radio communication apparatus is to be used,
wherein said specification controlling means automatically controls the frequencies of said transmission oscillator and said reception oscillator and automatically controls the gains of said transmission amplifier and said reception amplifier, in accordance with the positional information detected by said positional information detecting means.
